# EUROPÄISCHE PATENTSCHRIFT

(11) **EP 1 528 989 B1**
(45) Veröffentlichungstag und Bekanntmachung des Hinweises auf die Patenterteilung: **07.05.2008**
(21) Anmeldenummer: 03784138.4
(22) Anmeldetag: 01.08.2003
(51) Int. Cl.: B60G 17/052, B60G 17/005

(54) **SYSTEM UND VERFAHREN ZUM AUFRECHTERHALTEN DES NIVEAUS EINER NUTZEBENE EINES FAHRZEUGS**
SYSTEM AND METHOD FOR MAINTAINING THE LEVEL OF A USABLE PLANE OF A VEHICLE
SYSTEME ET PROCEDE POUR MAINTENIR LE NIVEAU D'UN PLAN UTILE D'UN VEHICULE

(30) Priorität: 02.08.2002 DE 10235473
(43) Veröffentlichungstag der Anmeldung: 11.05.2005
(73) Patentinhaber: KNORR-BREMSE SYSTEME FÜR NUTZFAHRZEUGE GMBH, 80809 München (DE)
(72) Erfinder: SZELL, Péter, H-6342 Dragszél (HU); ALBRECHT, Péter, H-6000 Kecskemét (HU); GASPAR, Mihaly, H-4804 Vasarosnamény (HU)
(74) Vertreter: Mattusch, Gundula
(86) Internationale Anmeldenummer: PCT/EP2003/008525
(87) Internationale Veröffentlichungsnummer: WO 2004/014675

(56) Entgegenhaltungen:
- EP-A- 0 523 788
- DE-A- 19 539 887
- FR-A- 2 755 402
- US-A- 4 553 773
- PATENT ABSTRACTS OF JAPAN vol. 2000, no. 22, 9. März 2001 (2001-03-09) -& JP 2001 121938 A (HINO MOTORS LTD), 8. Mai 2001 (2001-05-08)
- PATENT ABSTRACTS OF JAPAN vol. 016, no. 157 (M-1236), 16. April 1992 (1992-04-16) & JP 04 008613 A (HINO MOTORS LTD), 13. Januar 1992 (1992-01-13)

## Beschreibung

Die Erfindung betrifft ein System zum Aufrechterhalten des Niveaus einer Nutzebene eines Fahrzeugs mit mindestens einem die Nutzebene unterstützenden Luftfederbalg und mindestens einer Niveauregeleinrichtung zum Belüften und Entlüften des Luftfederbalgs.

Die Erfindung betrifft weiterhin ein Verfahren zum Aufrechterhalten des Niveaus einer Nutzebene eines Fahrzeugs, bei dem die Nutzebene durch mindestens einen Luftfederbalg unterstützt wird und in einem ersten aktiven Betriebszustand mindestens einer Niveauregeleinrichtung der Luftfederbalg belüftet beziehungsweise entlüftet wird.

Derartige Systeme und Verfahren sind bekannt. Sie können sowohl im Stand als auch bei fahrendem Fahrzeug dafür sorgen, dass das Niveau einer Nutzebene eines Fahrzeugs aufrechterhalten bleibt. Hierzu wird im Allgemeinen durch einen Wegsensor, der den Abstand zwischen einer Fahrzeugachse und dem Fahrzeugaufbau beziehungsweise der Nutzebene des Fahrzeugs misst, ein Regelkreis gebildet, so dass durch entsprechende Maßnahmen das Niveau der Nutzebene beeinflusst werden kann. Weiterhin ist in derartigen Niveauregeleinrichtungen häufig die Möglichkeit integriert, das Niveau des Fahrzeugaufbaus und damit der Nutzebene pneumatisch zu heben und zu senken, um auf diese Weise beispielsweise die Nutzebene einer Laderampe anpassen zu können.

Besondere Probleme treten dann auf, wenn das Niveau einer Nutzebene an einer Laderampe auch in dem Fall aufrechterhalten werden soll, wenn die Beladung mit einem Gabelstapler erfolgt. Im Normalfall ist man nämlich bestrebt, einen Sattelanhänger von dem Sattelschlepper an der Laderampe abzutrennen und diesen erst im vollgeladenen beziehungsweise entladenen Zustand wieder anzukoppeln. Der Sattelanhänger, der im Allgemeinen eine Luftbremse und eine Luftfederung aufweist, hat zwar einen eigenen Druckluftvorratsbehälter, so dass Niveauregulierungsmaßnahmen realisiert werden können, allerdings ist die zur Verfügung stehende Menge an Druckluft begrenzt.

Im Einzelnen erfolgt ein Beladevorgang so, dass die Höhe der Ladefläche der Höhe der Laderampe mit einem pneumatischen Hebeventil oder mit einem elektrisch gesteuerten Ventil angepasst wird, indem die Luftfedern gefüllt oder entlüftet werden. Bei Stückwaren erfolgt das Beladen häufig mit einem Gabelstapler. Derartige Fahrzeuge haben ein beträchtliches Gewicht, das im Normalfall minimal das Doppelte des Ladegewichts beträgt. Aufgrund des Ladegewichts und des Eigengewichts des Gabelstaplers sinkt die Ladefläche beim Auffahren um ein beträchtliches Maß ab, und beim Herunterfahren des Gabelstaplers von der Ladefläche hebt sich diese wieder. Bei beiden Vorgängen muss daher ein Niveauausgleich erfolgen. Zudem ist zu beachten, dass sich beim Fahren des Gabelstaplers auf der Ladefläche ständig der Neigungswinkel der Ladefläche ändert.

Erfahrungsgemäß ist es bei Systemen, die von Hand gesteuert werden, erforderlich, das Niveau der Ladefläche bis zur vollständigen Beladung des Sattelanhängers drei- bis viermal nachzustellen. Der Druckluftvorratsbehälter des Sattelanhängers ist so dimensioniert, dass er, ausgehend vom vollständig gefüllten Zustand, in der Lage ist, die gesamte Last im vollbeladenen Zustand durch Bereitstellen eines maximalen Hubs in den Luftfederbälgen aufzuheben. Kommt nun allerdings die ständige Änderung der Achsenbelastung hinzu, die auf das Befahren der Ladefläche mit dem Gabelstapler auftritt, tritt ein zusätzlicher Luftverbrauch auf, da bei herkömmlichen Systemen der Luftdruck in den Luftfederbälgen entsprechend der augenblicklichen Achsbelastung korrigiert wird. Der hierbei entstehende Luftverbrauch ist häufig so groß, dass die Druckluft im Vorratsbehälter nicht für die gesamte Ladezeit ausreicht. Daher muss der Motor des Fahrzeugs auch während des Beladevorgangs laufen, um so Druckluft erzeugen zu können, beziehungsweise das Zugfahrzeug muss am Anhänger mit laufendem Motor angekoppelt bleiben, um so eine Druckluftversorgung sicherzustellen.

In der US 4,355,901 ist ein System beschrieben, was an den geschilderten Problemen eines eventuell nicht ausreichenden Druckluftvorrats leidet. In Figur 4 der US 4,355,901 ist ein Hydraulikzylinder in einem Fahrzeug so angeordnet, dass ein Ausleger eines Kolbens fest mit einer Laderampe verbunden werden kann. Hierdurch wird ein Bezugspunkt für das Niveau des Fahrzeugs festgelegt. Ändert sich nun das Niveau des Fahrzeugs, so wird der Kolben in dem Hydraulikzylinder verschoben, was letztlich zum Be- und Entlüften von Luftfederbälgen führt.

In der DE 195 39 878 A1 wird ein System mit elektrischer Niveauregelung beschrieben, das eine Lösung im Hinblick auf die Problematik des Druckluftverbrauchs vorschlägt. Dabei ist vorgesehen, dass ein elektrischer Niveaufühler die Zeiträume, in denen sich ein Gabelstapler auf der Ladefläche des Fahrzeugs befindet, "erlernt". Während dieser Zeiträume korrigiert die Elektronik das Niveau der Ladefläche vom Fahrzeug nicht. Es erfolgt also kein Druckluftverbrauch. Problematisch an dieser Lösung ist allerdings, dass der Erfolg sehr stark von der Gleichmäßigkeit der Ladephasen abhängt. Wenn ein Gabelstapler aber von der Seite auf eine Ladefläche auffährt können die Ladezeiten sich stark von den Ladezeiten unterscheiden, die benötigt werden, wenn der Gabelstapler von hinten auf eine Ladefläche fährt. Hat das System nun die Ladezeiten mit Bezug auf eine der möglichen Auffahrarten des Gabelstaplers erlernt, so passen diese nicht zur anderen Auffahrmöglichkeit. Weiterhin ist problematisch, dass bei dem vorgeschlagenen System gemäß der DE 195 39 878 A1 der Lernmodus unter Umständen abgestellt werden kann, so dass der Zeitraum, in dem keine Niveauregelung abläuft, beliebig eingestellt werden kann. Somit kann durch unsachgemäßes Bedienen der Einrichtung ein Sicherheitsrisiko entstehen.

Weiterhin zeigt FR-A-2755402 ein System, das dem Gegenstand des Anspruchs 1 in Bezug auf konstruktive Merkmale nahekommt.

Der Erfindung liegt die **Aufgabe** zugrunde, die genannten Probleme und Schwierigkeiten des Standes der Technik zu überwinden und insbesondere ein System und ein Verfahren zur Verfügung zu stellen, die auf der Grundlage eines möglichst geringen Druckluftverbrauchs arbeiten können.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass mindestens eine Steuereinheit vorgesehen ist, die die Niveauregeleinrichtung aktiviert beziehungsweise deaktiviert, dass mindestens ein die Nutzebene unterstützender Hydraulikzylinder vorgesehen ist, der durch die Steuereinheit in mindestens einen ersten Betriebszustand und einen zweiten Betriebszustand überführbar ist, dass in dem ersten Betriebszustand des Hydraulikzylinders durch Belastung der Nutzebene entstehende Druckänderungen in dem Hydraulikzylinder ausgeglichen werden können und dass in dem zweiten Betriebszustand des Hydraulikzylinders durch Belastung der Nutzebene entstehende Druckänderungen in dem Hydraulikzylinder die Steuereinheit in der Weise beeinflussen, dass der mindestens eine Luftfederbalg belüftet oder entlüftet werden kann. Der Hydraulikzylinder erfüllt somit im Hinblick auf das Beladen der Nutzebene eine doppelte Aufgabe. Zum einen unterstützt er die Nutzebene. Er ist zwischen Achse und Ladefläche des Fahrzeugs angeordnet, und die Fläche des Kolbens des Hydraulikzylinders ist vorzugsweise so dimensioniert, dass sie in jedem Fall die Last von zum Beispiel einem beladenen Gabelstapler tragen kann. Wird nun ein Druckausgleich in dem Hydraulikzylinder in seinem zweiten Betriebszustand verhindert, so kann hierdurch ein übermäßiges Absinken der Ladefläche beim Befahren der Ladefläche vermieden werden. Zum anderen können Druckänderungen in dem Hydraulikzylinder, insbesondere durch das Befahren der Ladefläche mit einem Gabelstapler, erfasst werden, so dass hierdurch ein Regelkreis geschlossen wird und die Steuereinheit einen Luftfederbalg belüften beziehungsweise entlüften kann. Auf diese Weise wird der Verbrauch von Druckluft aus einem Vorratsbehälter minimiert, ein Aufrechterhalten des Niveaus aber dennoch sichergestellt.

Insbesondere ist das erfindungsgemäße System dadurch vorteilhaft, dass der mindestens eine Hydraulikzylinder in der Nähe des mindestens einen Luftfederbalgs zwischen einer Achse und der Nutzebene des Fahrzeugs angeordnet ist. Fährt der Gabelstapler beispielsweise auf die linke Seite der Nutzebene, so ist es sinnvoll, dass der zugehörige linke Luftfederbalg unter Umständen belüftet wird. Ist der Hydraulikzylinder dann auch auf der linken Seite angeordnet, so unterstützt er zunächst die Ladefläche in beschriebener Weise, andererseits erfasst er aber auch die Druckänderungen, aufgrund derer ein eventuelles Belüften des Luftfederbalgs veranlasst werden kann.

Es ist sinnvoll, dass mehrere paarweise angeordnete Hydraulikzylinder und Luftfederbälge vorgesehen sind. Vorzugsweise sind diese Paare bei den Enden der Fahrzeugsachsen positioniert.

Das erfindungsgemäße System ist in besonders vorteilhafter Weise dadurch weitergebildet, dass der mindestens eine Hydraulikzylinder einen ersten Arbeitsraum und einen zweiten Arbeitsraum aufweist, die durch einen Kolben voneinander getrennt sind, dass die Arbeitsräume durch eine mit einem über die Steuereinheit ansteuerbaren Schließventil versehene Bypass-Leitung miteinander verbunden sind, wobei in dem ersten Betriebszustand des Hydraulikzylinders das Schließventil geöffnet ist, so dass ein Druckausgleich zwischen den Arbeitsräumen erfolgen kann, und in dem zweiten Betriebszustand des Hydraulikzylinders das Schließventil geschlossen ist, so dass durch Belastung beziehungsweise Entlastung des Kolbens unterschiedliche Drücke in den Arbeitsräumen des Hydraulikzylinders aufgebaut werden können und dadurch die Steuereinheit beeinflusst werden kann. Fährt ein Gabelstapler auf die Ladefläche auf, so wird sich der Kolben des Hydraulikzylinders absenken. Folglich entsteht in dem unteren Arbeitsraum des Hydraulikzylinders ein erhöhter Druck. Im ersten Betriebszustand des Hydraulikzylinders kann dieser erhöhte Druck über die Bypass-Leitung, die den unteren Arbeitsraum mit dem oberen Arbeitsraum verbindet, abgebaut werden. Genauso kann umgekehrt ein erhöhter Druck in dem oberen Arbeitsraum über die Bypass-Leitung im ersten Betriebszustand des Hydraulikzylinders abgebaut werden. Im zweiten Betriebszustand des Hydraulikzylinders hingegen, der während des Beladens und Entladens eingestellt wird, erfolgt ein solcher Druckausgleich nicht. Fährt somit ein Gabelstapler auf die Ladefläche auf, so unterstützt der Kolben die Ladefläche, wodurch das Absinken der Ladefläche klein gehalten wird. Gleichzeitig kann eine Druckerhöhung im unteren Arbeitsraum die Steuereinheit dazu veranlassen, einen Luftfederbalg zu belüften. Im umgekehrten Fall, wenn die Ladefläche entlastet wird, erhöht sich der Druck im oberen Arbeitsraum des Hydraulikzylinders, so dass bei Erfassung dieser Druckänderung beziehungsweise des absoluten Druckwertes in entsprechender Weise von der Steuereinheit ein Entlüften des Luftfederbalges veranlasst werden kann.

Weiterhin ist es bevorzugt, dass in der Bypass-Leitung ein regelbares Drosselventil vorgesehen ist, insbesondere zur Realisierung einer Stoßdämpferfunktion des Hydraulikzylinders. Ebenfalls ist es möglich, eine ungeregelte Drosselung zu verwenden. In jedem Fall ist es nützlich, dem Hydraulikzylinder auf diese Weise eine Doppelfunktion, nämlich als zentrales Element im Hinblick auf die Unterstützung der Plattform im zweiten Betriebszustand als auch als Stoßdämpfer im ersten Betriebszustand zuzuordnen.

Weiterhin ist es nützlich, dass in dem mindestens einen Hydraulikzylinder mindestens ein Druckbegrenzungsventil vorgesehen ist, das oberhalb eines vorbestimmten Grenzdrucks einen Druckausgleich auch bei geschlossenem Schließventil ermöglicht. Auf diese Weise kann eine Überschreitung des maximal erlaubten Hydraulikdruckes verhindert werden.

Das erfindungsgemäße System ist in besonders vorteilhafter Weise dadurch weitergebildet, dass die Steuereinheit eine erste Ventileinrichtung aufweist, wobei die erste Ventileinrichtung im zweiten Betriebszustand des Hydraulikzylinders von diesem unmittelbar oder mittelbar in mehrere Schaltzustände überführt werden kann, mit einem ersten Schaltzustand zum Koppeln des Luftfederbalgs mit einem Druckluftvorrat, einem zweiten Schaltzustand zum Entkoppeln des Luftfederbalgs von dem Druckluftvorrat und einem dritten Schaltzustand zum Entlüften des Luftfederbalgs. Im unbelasteten Zustand der Ladeebene wird die sich vorzugsweise als 3/3-Ventil ausgebildete Ventileinrichtung im zweiten Schaltzustand befinden. In diesem ist der Druckluftvorrat von der Luftfeder entkoppelt, da keine Notwendigkeit besteht, die Luftfeder zu belüften oder zu entlüften. Wird nun die Plattform belastet, so steigt der Druck im unteren Arbeitsraum des Hydraulikzylinders an. Dies führt, beispielsweise ab einem bestimmten Grenzdruck, zu einer Betätigung der ersten Ventileinrichtung, so dass diese in den ersten Schaltzustand übergeht. Der Grenzdruck kann beispielsweise so festgelegt sein, dass ein unbeladener Gabelstapler diesen gerade nicht aufbringt. Der Luftfederbalg kann somit entsprechend dem Gewicht der zusätzlich aufgeladenen Fracht durch den Vorrat belüftet werden. Hierdurch wird der untere Arbeitsraum des Hydraulikzylinders wieder entlastet, so dass der zweite Schaltzustand nach eingeregeltem Niveau der Ladefläche wieder angenommen wird. Wird die Nutzebene entlastet, beispielsweise durch Herunterfahren des Gabelstaplers von der Nutzebene, wird der Druck im oberen Arbeitsraum des Hydraulikzylinders ansteigen. Hierdurch kann die ersten Ventileinrichtung, beispielsweise ab einem vorbestimmten Grenzdruck, in den dritten Schaltzustand überführt werden, so dass der Luftfederbalg entlüftet werden kann. Wiederum kann der Grenzdruck beispielsweise so festgelegt sein, dass eine Entlüftung des Federbalgs bei herunterfahrendem unbeladenem Gabelstapler gerade nicht stattfindet. Durch die Entlüftung nimmt der Druck im oberen Arbeitsraum des Hydraulikzylinders ab, und die erste Ventileinrichtung kann wieder in den zweiten Schaltzustand übergehen. Auch beim Herunterfahren des Gabelstaplers von der Nutzebene wird somit das Niveau der Nutzebene aufrechterhalten.

Insbesondere ist es vorteilhaft, dass das Überführen der ersten Ventileinrichtung in die mehreren Schaltzustände unter Vermittlung von Druckfühlern erfolgt, die an der ersten Ventileinrichtung angeordnet sind. Somit ist es ausreichend, Druckluftleitungen an dem Hydraulikzylinder anzubringen, diese in die Steuereinheit zu führen und dort mit der ersten Ventileinrichtung beziehungsweise mit an der ersten Ventileinrichtung angeordneten Druckfühlern zu verbinden.

Weiterhin ist es besonders bevorzugt, dass die Steuereinheit eine manuell einstellbare zweite Ventileinrichtung aufweist, mit einem ersten Schaltzustand, in dem das mindestens eine Niveauregelventil mit dem mindestens einen Luftfederbalg gekoppelt ist, einem zweiten Schaltzustand, in dem das mindestens eine Niveauregelventil von dem mindestens einen Luftfederbalg entkoppelt ist, einem dritten Schaltzustand zum Senken der Nutzebene und einem vierten Schaltzustand zum Heben der Nutzebene. Der erste Schaltzustand der zweiten Ventileinrichtung wird vorzugsweise während der Fahrt eingestellt, da in diesem Schaltzustand das Niveauregelventil aktiv ist. Der zweite Schaltzustand wird im ruhenden Zustand des Fahrzeugs gewählt, da in diesem Zustand eine Niveauregelung mit dem Niveauregelventil nicht erforderlich beziehungsweise beim Auf- und Abfahren eines Gabelstaplers unerwünscht ist.

Weiterhin ist es besonders nützlich, dass die Steuereinheit eine manuell einstellbare dritte Ventileinrichtung aufweist, mit einem ersten Schaltzustand zum Erzeugen des ersten Betriebszustands des Hydraulikzylinders und einem zweiten Schaltzustand zum Erzeugen des zweiten Betriebszustands des Hydraulikzylinders. Im ersten Betriebszustand des Hydraulikzylinders sind die Arbeitsräume des Hydraulikzylinders miteinander über die Bypass-Leitung verbunden, gegebenenfalls mit einer, insbesondere regelbaren, Drossel. In diesem Zustand dient der Hydraulikzylinder im Wesentlichen als Stoßdämpfer, so dass dieser Zustand vorzugsweise im Fahrbetrieb des Fahrzeugs eingestellt ist. Durch manuelles Betätigen der dritten Ventileinrichtung, kann eine Verbindung zwischen dem Druckluftvorrat und einem Betätigungselement am Schließventil der Bypass-Leitung hergestellt werden. Durch dieses Betätigungselement wird das Schließventil umgestellt, so dass die Bypass-Leitung geschlossen wird. Auf diese Weise wird auch der Regelkreis zum Aufrechterhalten des Niveaus der Nutzebene geschlossen.

Es kann ebenfalls nützlich sein, dass das Überführen der ersten Ventileinrichtung in die mehreren Schaltzustände unter Vermittlung von Druckfühlern erfolgt, die an dem mindestens einen Hydraulikzylinder angeordnet sind.

Dies ist insbesondere in dem Zusammenhang nützlich, dass die Steuereinheit eine elektronische Steuerung umfasst. In diesem Fall können von den Druckfühlern elektrische Signale an die elektronische Steuerung übermittelt werden, so dass letztlich die elektronische Steuerung die Betätigung der ersten Ventileinrichtung übernimmt.

In diesem Zusammenhang ist es besonders nützlich, dass die elektronische Steuerung die erste Ventileinrichtung und das Schließventil elektrisch ansteuert. Bei einer Steuereinheit mit einer manuell betätigbaren dritten Ventileinrichtung, wird das Schließventil über eine Druckluftverbindung betätigt. Im Gegensatz hierzu, ist es bei der Ausführungsform mit elektronischer Steuereinheit möglich, das Schließventil elektrisch anzusteuern.

In diesem Zusammenhang hat es sich als vorteilhaft erwiesen, dass eine Betätigung der ersten Ventileinrichtung und des Schließventils, die aufgrund der elektrischen Ansteuerung erfolgt, pneumatisch unterstützt wird. Da die elektrische Betätigung der Ventile über Magnetventile umgesetzt wird, kann es nützlich sein, die erforderliche Leistung der Magnetventile dadurch zu minimieren, dass eine pneumatische Unterstützung der Ventilbetätigung vorliegt.

Das erfindungsgemäße System kann in besonders vorteilhafter Weise dadurch weitergebildet sein, dass die elektronische Steuerung die erste Ventileinrichtung so steuert, dass die erste Ventileinrichtung zusammen mit einem Niveausensor den ersten Betriebszustand der Niveauregeleinrichtung realisiert, während sich der Hydraulikzylinder in seinem ersten Betriebszustand befindet und dass sich der Hydraulikzylinder während des zweiten Betriebszustand der Niveauregeleinrichtung in seinem zweiten Betriebszustand befindet. Die erste Ventileinrichtung kann auf diese Weise sowohl in Abhängigkeit der ermittelten Drücke in den Arbeitsräumen des Hydraulikzylinders als auch in Abhängigkeit des Niveausensors arbeiten und dabei den Luftfederbalg entlüften beziehungsweise belüften oder vom Druckluftvorrat trennen. Die Zusammenarbeit mit dem Niveausensor findet im Rahmen der vorliegenden Erfindung vorzugsweise dann statt, wenn sich der Hydraulikzylinder in seinem ersten Betriebszustand befindet.

Ebenfalls kann es nützlich sein, dass die elektronische Steuerung in Abhängigkeit eines Geschwindigkeitssignals in den aktiven Zustand der Niveauregeleinrichtung umschalten kann. Dies ist eine sicherheitstechnische Maßnahme. Diese gewährleistet, dass die Niveauregeleinrichtung in den dem Fahrzustand des Fahrzeugs entsprechenden Zustand überführt wird, so dass auch in dem Fall, wenn es vergessen wird, die Niveauregeleinrichtung vor Fahrtbeginn in den Fahrzustand zu überführen, eine Niveauregelung stattfindet.

Die Erfindung baut auf dem gattungsgemäßen Verfahren dadurch auf, dass zwischen dem ersten Betriebszustand der Niveauregeleinrichtung und einem zweiten Betriebszustand der Niveauregeleinrichtung durch mindestens eine Steuereinheit umgeschaltet wird, wobei die Niveauregeleinrichtung in dem zweiten Betriebszustand deaktiviert ist, dass durch die Steuereinheit zwischen mindestens einem ersten Betriebszustand und einem zweiten Betriebszustand mindestens eines die Nutzebene unterstützenden Hydraulikzylinders umgeschaltet wird, dass in dem ersten Betriebszustand des Hydraulikzylinders durch Belastung der Nutzebene entstehende Druckänderungen in dem Hydraulikzylinder ausgeglichen werden und dass in dem zweiten Betriebszustand des Hydraulikzylinders durch Belastung der Nutzebene entstehende Druckänderungen in dem Hydraulikzylinder die Steuereinheit in der Weise beeinflussen, dass der mindestens eine Luftfederbalg belüftet oder entlüftet werden kann. Auf diese Weise werden die Vorteile und Besonderheiten des erfindungsgemäßen Systems auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicher Weise dadurch weitergebildet, dass der mindestens eine Hydraulikzylinder einen ersten Arbeitsraum und einen zweiten Arbeitsraum aufweist, die durch einen Kolben voneinander getrennt sind, und dass die Arbeitsräume durch eine mit einem über die Steuereinheit ansteuerbaren Schließventil versehene Bypass-Leitung miteinander verbunden sind, wobei in dem ersten Betriebszustand des Hydraulikzylinders das Schließventil geöffnet ist, so dass ein Druckausgleich zwischen den Arbeitsräumen erfolgen kann, und in dem zweiten Betriebszustand des Hydraulikzylinders das Schließventil geschlossen ist, so dass durch Belastung beziehungsweise Entlastung des Kolbens unterschiedliche Drücke in den Arbeitsräumen des Hydraulikzylinders aufgebaut werden können und dadurch die Steuereinheit beeinflusst wird.

Weiterhin ist es im Zusammenhang mit dem erfindungsgemäßen Verfahren besonders nützlich, dass ein Fluidstrom in der Bypass-Leitung unter Regelung gedrosselt wird, insbesondere zur Realisierung einer Stoßdämpferfunktion des Zylinderkolbens.

Das Verfahren ist ferner besonders unter der Vorraussetzung in vorteilhafter Weise ausführbar, dass in dem mindestens einen Hydraulikzylinder mindestens ein Druckbegrenzungsventil vorgesehen ist, das oberhalb eines vorbestimmten Grenzdrucks einen Druckausgleich auch bei geschlossenem Schließventil ermöglicht.

Ebenfalls ist das erfindungsgemäße Verfahren in dem Zusammenhang nützlich, dass die Steuereinheit eine erste Ventileinrichtung aufweist, wobei die erste Ventileinrichtung im zweiten Betriebszustand des Hydraulikzylinders von diesem in mehrere Schaltzustände überführt werden kann, mit einem ersten Schaltzustand zum Koppeln des Luftfederbalgs mit einem Druckluftvorrat, einem zweiten Schaltzustand zum Entkoppeln des Luftfederbalgs von dem Druckluftvorrat und einem dritten Schaltzustand zum Entlüften des Luftfederbalgs.

In diesem Zusammenhang kann es nützlich sein, dass das Überführen der ersten Ventileinrichtung in die mehreren Schaltzustände unter Vermittlung von Druckfühlern erfolgt, die an der ersten Ventileinrichtung angeordnet sind.

Des Weiteren ist das erfindungsgemäße Verfahren in dem Zusammenhang vorteilhaft ausführbar, dass die Steuereinheit eine manuell einstellbare zweite Ventileinrichtung aufweist, mit einem ersten Schaltzustand, in dem die mindestens eine Niveauregeleinrichtung mit dem mindestens einen Luftfederbalg gekoppelt ist, einem zweiten Schaltzustand, in dem die mindestens eine Niveauregeleinrichtung von dem mindestens einen Luftfederbalg entkoppelt ist, einem dritten Schaltzustand zum Senken der Nutzebene und einem vierten Schaltzustand zum Heben der Nutzebene.

Ebenfalls ist es nützlich, dass die Steuereinheit eine manuell einstellbare dritte Ventileinrichtung aufweist, mit einem ersten Schaltzustand zum Erzeugen des ersten Betriebszustands des Hydraulikzylinders und einem zweiten Schaltzustand zum Erzeugen des zweiten Betriebszustands des Hydraulikzylinders.

Das erfindungsgemäße Verfahren ist in besonders vorteilhafter Weise so weitergebildet, dass das Überführen der ersten Ventileinrichtung in die mehreren Schaltzustände unter Vermittlung von Druckfühlern erfolgt, die an dem mindestens einen Hydraulikzylinder angeordnet sind.

Das erfindungsgemäße Verfahren ist auch unter der Vorraussetzung in nützlicher Weise ausführbar, dass die Steuereinheit eine elektronische Steuerung umfasst.

In diesem Zusammenhang ist es nützlich, dass die elektronische Steuerung die erste Ventileinrichtung und das Schließventil elektrisch ansteuert.

Weiterhin ist im Hinblick darauf von Vorteil, dass eine Betätigung der ersten Ventileinrichtung und des Schließventils aufgrund der elektrischen Ansteuerung pneumatisch unterstützt wird.

Das erfindungsgemäße Verfahren kann so ausgebildet sein, dass die elektronische Steuerung die erste Ventileinrichtung so steuert, dass die erste Ventileinrichtung zusammen mit einem Niveausensor den ersten Betriebszustand der Niveauregeleinrichtung realisiert, während sich der Hydraulikzylinder in seinem ersten Betriebszustand befindet und dass sich der Hydraulikzylinder während des zweiten Betriebszustands der Niveauregeleinrichtung in seinem zweiten Betriebszustand befindet.

Nützlicherweise ist im Rahmen des erfindungsgemäßen Verfahrens vorgesehen, dass die elektronische Steuerung in Abhängigkeit eines Geschwindigkeitssignals in den aktiven Zustand der Niveauregeleinrichtung umschalten kann.

Der Erfindung liegt die Erkenntnis zugrunde, dass es mit Hilfe eines Hydraulikzylinders, der in zwei unterschiedliche Betriebszustände überführt werden kann, möglich ist, das Niveau einer Nutzebene zuverlässig aufrechtzuerhalten, wobei gleichzeitig nur ein sehr geringer Druckluftverbrauch stattfindet. Die erfindungsgemäße Lösung ist sowohl im Zusammenhang mit einer reinen pneumatischen Steuerung als auch unter Verwendung einer elektronischen Steuerung realisierbar. Insbesondere ist die Empfindlichkeit des Systems so einstellbar, dass das durchschnittliche Eigengewicht einer Lademaschine, das heißt beispielsweise eines Gabelstaplers, keine Regelung verursacht, die einen Luftverbrauch nach sich zieht. In vorteilhafter Weise kann der Hydraulikzylinder die weitere Aufgabe erfüllen, dass er während der Fahrt als Stoßdämpfer arbeitet. Dies ist insbesondere dann nützlich, wenn eine Drosselung zwischen den Arbeitsräumen des Hydraulikzylinders vorliegt und vorzugsweise regelbar ist.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer ersten Ausführungsform eines erfindungsgemäßen Systems;
- Figur 2: eine schematische Darstellung zur Erläuterung der Anordnung erfindungsgemäßer Systeme im Fahrzeug; und
- Figur 3: eine schematische. Darstellung einer zweiten Ausführungsform eines erfindungsgemäßen Systems.

Bei der nachfolgenden Beschreibung der Zeichnungen bezeichnen gleiche Bezugszeichen gleiche oder vergleichbare Komponenten.

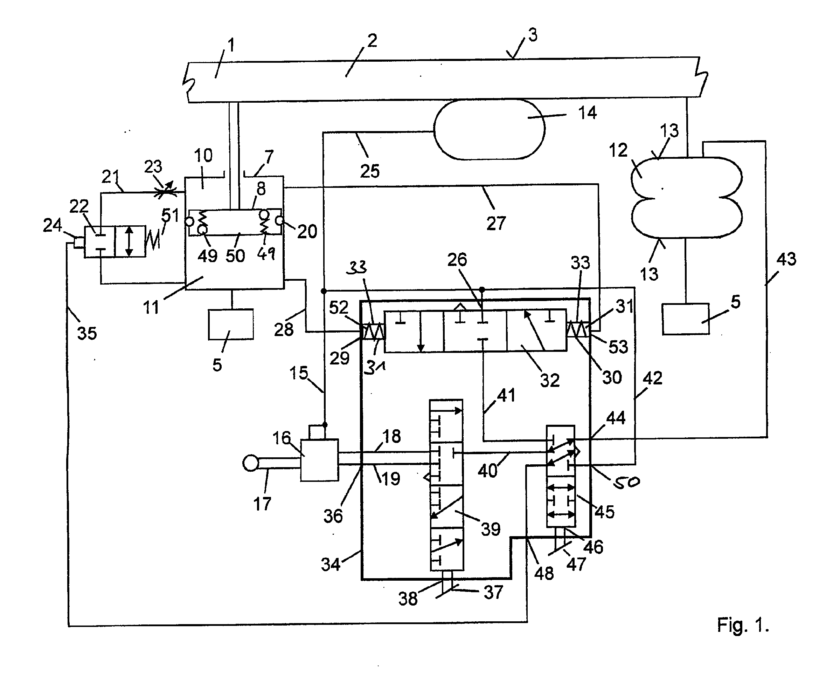

Figur 1 zeigt eine schematische Darstellung einer ersten Ausführungsform eines erfindungsgemäßen Systems. Von einem Sattelanhänger 1 sind schematisch eine Ladeplattform 2 mit einer Ladefläche 3, im Rahmen der vorliegenden Erfindung auch als Nutzebene bezeichnet, dargestellt. Diese Ladefläche 3 ist in der ganzen Länge und Breite eine flache Oberfläche, die von einem Gabelstapler befahrbar ist. Dabei kann die Ladefläche 3 mit Stückwaren beladen werden. Weiterhin ist eine Achse 5 des Sattelanhängers 1 schematisch dargestellt.

Zwischen der Achse 5 und der Plattform 2 ist ein Luftfederbalg 12 angeordnet. Dieser ist mit seinen Stirnseiten 13 der Plattform 2 beziehungsweise der Achse 5 zugewandt angeordnet.

Weiterhin ist zwischen der Plattform 2 und der Achse 5 ein Hydraulikzylinder 7 vorgesehen, der mit einer Hydraulikflüssigkeit gefüllt ist und einen Kolben 8 umfasst. Der Kolben 8 unterteilt den Hydraulikzylinder 7 in zwei Arbeitsräume 10, 11, einen oberen Arbeitsraum 10 und einen unteren Arbeitsraum 11. Der Hydraulikzylinder 7 ist mit seiner unteren Fläche mit der Achse 5 gekoppelt. Der Kolben 8 ist mit der Plattform 2 gekoppelt. Die Arbeitsräume 10, 11 des Hydraulikzylinders 7 sind über eine Bypass-Leitung 21 miteinander verbunden. In der Bypass-Leitung 21 ist ein Schließventil 22 vorgesehen, das durch ein Betätigungselement 24 gegen die Kraft einer Feder 51 vom geöffneten Zustand in den geschlossenen Zustand überführbar ist. Weiterhin ist in der Bypass-Leitung 21 ein regelbares Drosselventil 23 vorgesehen, das in geöffnetem Zustand des Schließventils 22 zum Zuge kommt. Da der Kolben 8 im Hydraulikzylinder 7 die Arbeitsräume 10, 11 mittels einer Dichtung 20 gegeneinander abdichtet, sind Druckbegrenzungsventile 49 vorgesehen, die eine Druckbelastung unterhalb einer Höchstgrenze halten.

Weiterhin ist ein Druckluftvorratsbehälter 14 vorgesehen, der über Leitungen 25, 15 mit einem Niveauregelventil 16 in Verbindung steht. Das Niveauregelventil 16 ist in bekannter Weise mit einem als Niveausensor arbeitenden Hebel 17 ausgestattet.

Ferner ist eine Steuereinheit 34 vorgesehen. Diese Steuereinheit 34 umfasst drei Ventileinrichtungen 32, 39, 45.

Die erste Ventileinrichtung 32 ist als 3/3-Ventil ausgebildet und mit Druckfühlern 29, 30 versehen. Die Druckfühler sind als Betätigungselemente 33 mit Federn 31 ausgelegt. Der erste Druckfühler 29 ist über einen Eingang 52 der Steuereinheit 34 und über eine pneumatische Leitung 28 mit dem unteren Arbeitsraum 11 des Hydraulikzylinders 7 gekoppelt. Der zweite Druckfühler 30 ist über einen Eingang 53 der Steuereinheit 34 und über eine pneumatische Leitung 27 mit dem oberen Arbeitsraum 10 des Hydraulikzylinders 7 verbunden. Die erste Ventileinrichtung 32 steht über einen Eingang 26 der Steuereinheit 34 und eine pneumatische Leitung 42 sowie eine pneumatische Leitung 25 mit dem Druckluftvorratsbehälter 14 in Verbindung. Über eine weitere Leitung 41 steht die erste Ventileinrichtung 32 mit einer unten im Einzelnen beschriebenen dritten Ventileinrichtung 45 in Verbindung.

Die Steuereinheit 34 umfasst eine zweite Ventileinrichtung 39, die als Hebe/Senk-Ventil ausgebildet ist und mit dem Niveauregelventil 16 zusammenwirken kann. Zu diesem Zweck ist die zweite Ventileinrichtung über einen Eingang 36 der Steuereinheit 34 und zwei pneumatische Leitungen 18, 19 mit der Niveauregeleinrichtung 16 verbunden. Weiterhin steht die zweite Ventileinrichtung 39 über eine pneumatische Leitung 40 mit der unten im Einzelnen beschriebenen dritten Ventileinrichtung 45 in Verbindung. Ferner ist über einen Eingang 38 der Steuereinheit 34 ein Betätigungselement 37 angeschlossen, über das die zweite Ventileinrichtung 39 in ihre verschiedenen Schaltzustände überführbar ist. Mit der zweiten Ventileinrichtung 39 sind vier verschiedene Schaltzustände realisierbar.

Die dritte Ventileinrichtung 45 ist über einen Ausgang 44 und eine pneumatische Leitung 43 mit dem Luftfederbalg 12 verbunden. Über eine pneumatische Leitung 41 ist die dritte Ventileinrichtung 45 mit der ersten Ventileinrichtung 32 verbunden. Die dritte Ventileinrichtung 45 ist weiterhin über eine pneumatische Leitung 40 mit der zweiten Ventileinrichtung verbunden. Ferner ist die dritte Ventileinrichtung 45 über einen Eingang 50 der Steuereinheit 34 und die pneumatischen Leitungen 42 und 25 mit dem Druckluftvorratsbehälter 14 verbunden. Die dritte Ventileinrichtung 45 steht weiterhin über einen Ausgang 48 und eine pneumatische Leitung 35 mit dem Betätigungselement 24 des Schließventils 22 in Verbindung. Ferner ist die dritte Ventileinrichtung 45 über einen Eingang 46 mittels einem Betätigungselement 47 in verschiedene Schaltzustände überführbar. Mit der dritten Ventileinrichtung 45 sind zwei verschiedene Schaltzustände realisierbar.

Zur Erläuterung der Funktion der Ausführungsform gemäß Figur 1 sind unterschiedliche Betriebszustände separat zu betrachten.

Zunächst wird der normale Fahrbetrieb erläutert. In diesem Betriebszustand befindet sich die dritte Ventileinrichtung 45 in ihrem ersten Betriebszustand, bei dem die pneumatische Leitung 40 mit der pneumatischen Leitung 43 in Verbindung steht und bei dem die pneumatische Leitung 35 mit einer Entlüftung verbunden ist. Aufgrund der Verbindung der pneumatischen Leitung 35 mit der Entlüftung treibt die Feder 51 das Schließventil 22 entgegen dem deaktivierten Betätigungselement 24 in die geöffnete Stellung des Schließventils 22, so dass die Arbeitsräume 10, 11 des Hydraulikzylinders 7 miteinander kommunizieren können. Im Fahrbetrieb kann somit der Hydraulikzylinder 7 eine Stoßdämpferfunktion wahrnehmen, die vorzugsweise noch über die geregelte Drossel 23 beeinflusst werden kann. Weiterhin befindet sich die zweite Ventileinrichtung 39 im Fahrbetrieb in dem Zustand, in dem die pneumatische Leitung 18 mit der pneumatischen Leitung 40 in Verbindung steht. Hierdurch besteht eine Verbindung zwischen dem Niveauregelventil 16 und dem Luftfederbalg 12, so dass eine Niveauregulierung während der Fahrt in bekannter Weise erfolgen kann.

Wird nun das Fahrzeug angehalten, so kann das System in einen zweiten Betriebszustand überführt werden. Dies erfolgt durch Umstellen der zweiten Ventileinrichtung 39 mittels dem Betätigungselement 37 in den Schaltzustand, in dem das Niveauregelventil 16 von der Leitung 40 entkoppelt ist. Es erfolgt somit keine weitere Niveauregulierung. Soll nun der Sattelanhänger 1 beladen werden, so wird die Ladefläche 3 durch weiteres Betätigen der Betätigungseinrichtung 37 auf das Niveau einer Laderampe gebracht. Falls zu diesem Zweck die Ladefläche 3 abgesenkt werden muss, so wird die zweite Ventileinrichtung 39 in den Zustand überführt, in dem die pneumatische Leitung 40 mit der Entlüftung der zweiten Ventileinrichtung 39 verbunden ist. Hierdurch erfolgt ein Entlüften des Luftfederbalgs 12 über die pneumatische Leitung 43, die zweite Ventileinrichtung 43 und die pneumatische Leitung 40. Muss die Ladefläche 3 hingegen angehoben werden, so wird die zweite Ventileinrichtung 39 in den Zustand überführt, in dem die pneumatische Leitung 19 mit der pneumatischen Leitung 40 verbunden ist. Hierdurch kann der Luftfederbalg 12 über die pneumatische Leitung 40, die dritte Ventileinrichtung 45 und die pneumatische Leitung 43 belüftet werden. Nachdem das richtige Niveau eingestellt ist, wird die zweite Ventileinrichtung 39 in den Zustand überführt, in dem sowohl die pneumatische Leitung 18 als auch die pneumatische Leitung 19 von der pneumatischen Leitung 40 entkoppelt sind. Es finden daher keine Belüftung und keine Entlüftung mehr statt. Das Niveauregelventil 16 ist deaktiviert.

Um nun in erfindungsgemäßer Weise sicherzustellen, dass das Niveau der Ladefläche 2 beim Auffahren und Herunterfahren eines Gabelstaplers auf die Ladefläche 3 zwar aufrechterhalten wird, jedoch unter minimiertem Druckluftverbrauch, wird die dritte Ventileinrichtung 45 über das Betätigungselement 47 in den Schaltzustand überführt, in dem die pneumatische Leitung 42 mit der pneumatischen Leitung 35 verbunden ist und die pneumatische Leitung 44 mit der pneumatischen Leitung 41 verbunden ist. Aufgrund der Verbindung der pneumatischen Leitung 35 mit der pneumatischen Leitung 42 wird das Betätigungselement 24 des Schließventils 22 mit Druckluft beaufschlagt, so dass das Schließventil 22 entgegen der Federkraft der Feder 51 in einen geschlossenen Zustand gebracht wird. Die Arbeitsräume 10, 11 des Hydraulikzylinders sind somit voneinander entkoppelt. Fährt nun der Gabelstapler auf die Ladefläche 3 auf, so kann der Kolben 50 dazu beitragen, dass die Ladefläche unterstützt wird. Gleichzeitig erhöht sich aber der Druck in dem unteren Arbeitsraum 11 des Hydraulikzylinders 7, so dass über die pneumatische Leitung 28 der Druckfühler 29 mit Druck beaufschlagt wird. Beim Überschreiten einer bestimmten Druckschwelle kann somit die erste Ventileinrichtung in den Zustand überführt werden, in dem über den Eingang 26, die pneumatische Leitung 42 und die pneumatische Leitung 25 der Druckluftvorrat 14 mit der pneumatischen Leitung 41 verbunden wird. Da die pneumatische Leitung 41 über die dritte Ventileinrichtung 45 mit der pneumatischen Leitung 43 verbunden ist, wird der Luftfederbalg belüftet, so dass ein Absinken der Ladefläche 3 ausgeglichen werden kann. Hierdurch hebt sich der Kolben 50 des Hydraulikzylinders 7, der Druck im unteren Arbeitsraum 11 des Hydraulikzylinders 7 nimmt ab, und die erste Ventileinrichtung 32 wird automatisch wieder in den Schaltzustand überführt, in dem der Druckluftvorrat von der pneumatischen Leitung 41 entkoppelt ist. Beim Herunterfahren des Gabelstaplers von der Ladefläche 3 hebt sich der Kolben 50 an, was den Druck im oberen Arbeitsraum 10 des Hydraulikzylinders 7 erhöht. Nunmehr gelangt ein erhöhter Druck über die pneumatische Leitung 27 zum Druckfühler 30. Auf diese Weise kann die erste Ventileinrichtung 32 in den Schaltzustand überführt werden, in dem die pneumatische Leitung 41 mit der Entlüftung der ersten Ventileinrichtung 32 verbunden ist. Dies geschieht vorzugsweise aber nur dann, wenn tatsächlich eine Niveauanpassung erforderlich ist, also beispielsweise beim Entladen der Ladefläche. Dann kann der Luftfederbalg 12 über die pneumatische Leitung 43, die dritte Ventileinrichtung 45, die pneumatische Leitung 41 und die erste Ventileinrichtung 32 entlüftet werden. Ein überhöhtes Niveau der Ladefläche 3 wird somit korrigiert.

Für das Regelverhalten des Systems ist die Auslegung der Betätigungselemente 33 an der ersten Ventileinrichtung wichtig. Durch die Federkennlinien der Druckfeder 31 können die Ansprechdrücke eingestellt werden, bei denen die erste Ventileinrichtung 32 umschaltet. Es kann beispielsweise vorgesehen sein, dass die beiden Druckfedern 31 unterschiedliche Federkennlinien aufweisen, wobei in dem Druckfühler 29 ein größerer Ansprechwert als in dem Druckfühler 30 realisiert werden kann. Der Ansprechwert im Druckfühler 29 kann beispielsweise so gewählt werden, dass er größer ist als der Druck, der im unteren Arbeitsraum 11 auftritt, wenn ein entladener Gabelstapler mit maximal zulässigem Gewicht auf der Ladefläche 3 steht oder fährt.

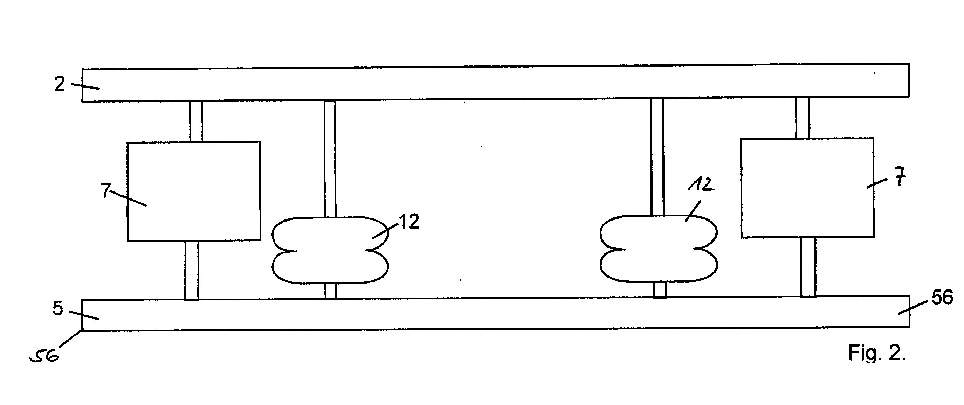

Figur 2 zeigt eine schematische Darstellung zur Erläuterung der Anordnung erfindungsgemäßer Systeme im Fahrzeug. Es sind zwei Hydraulikzylinder 7 und zwei Federbälge 12 dargestellt. Die Hydraulikzylinder 7 sind jeweils an den Enden 56 der Fahrzeugachse 5 eingebaut. Im Bereich dieser Enden 56 der Achse 5 sind auch die Luftfedern 12 und die (nicht dargestellten) Niveauregelventile angeordnet. Indem diese Elemente in geeigneter Weise mehrfach am Fahrzeug angeordnet werden, können mehrkreisige Systeme im Hinblick auf die Fahrzeugseiten und/oder die Fahrzeugachsen beziehungsweise Achsengruppen ausgebildet werden. Werden in diesem Sinne Arbeitsräume der Hydraulikzylinder 7 miteinander verbunden und deren Druck den Betätigungselementen der ersten Ventileinrichtung 32 (siehe Figur 1) zugeführt, so müssen die Druckschwellen der Betätigungselemente entsprechend definiert werden.

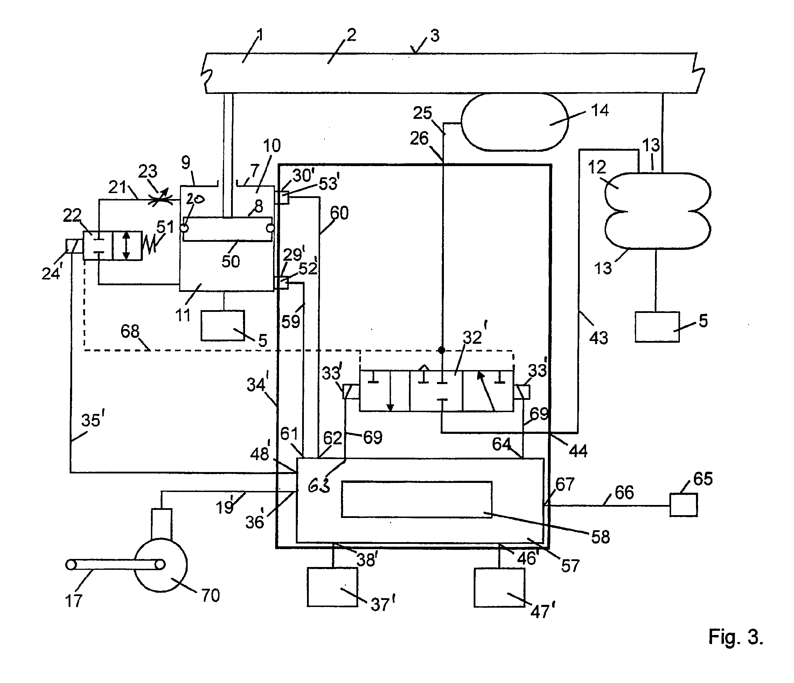

Figur 3 zeigt eine schematische Darstellung einer zweiten Ausführungsform eines erfindungsgemäßen Systems. Bei dieser Ausführungsform sind der Hydraulikzylinder 7 und der Luftfederbalg 12 in derselben Weise zwischen Fahrzeugachse 5 und Plattform 2 eines Sattelanhängers 1 angeordnet, wie bei der Ausführungsform gemäß Figur 1. Allerdings ist die Steuereinheit 34' in anderer Weise ausgebildet als die Steuereinheit 34 gemäß Figur 1. Ebenso sind Komponenten des Systems, die mit der Steuereinheit 34' kommunizieren anders ausgebildet, als die entsprechenden Komponenten gemäß Figur 1.

Die Steuereinheit 34' enthält eine elektronische Steuerung 57, die einen Mikrocontroller 58 aufweist. Die elektronische Steuerung 57 ist über einen Ausgang 48' und eine elektrische Leitung 25' mit einem elektrisch ansteuerbaren Betätigungselement 24' des Schließventils 22 verbunden. Dieses Betätigungselement 24' kann über eine pneumatische Leitung 68, die mit dem Druckluftvorrat 14 über den Eingang 26 der Steuerung 34' und die Leitung 25 verbunden ist, pneumatisch unterstützt werden.

Die elektronische Steuerung 57 ist weiterhin über einen Eingang 36' und eine elektrische Leitung 19' mit einem Niveausensor 70 verbunden, der mit einem Hebel 17 in bekannter Weise zusammenarbeitet.

Über einen weiteren Eingang 38' ist die elektronische Steuerung 57 mit einem Betätigungselement 37' verbunden. Dieses dient zum Überführen der Niveauregelung in unterschiedliche Betriebszustände, beispielsweise "Fahrt", "Stop", "Heben" und "Senken".

Ferner ist die elektronische Steuerung 57 über einen Eingang 46' mit einem weiteren Betätigungselement 47' verbunden, über das der Betriebszustand des Systems im Hinblick auf die Funktionsweise des Hydraulikzylinders 7 eingestellt wird. Ebenfalls ist es möglich, die Funktionen der Betätigungselemente 37' und 47' zu vereinigen, indem nämlich die Betriebszustände der Niveauregulierung und des Hydraulikzylinders 7 sinnvoll aufeinander abgestimmt werden. Beispielsweise sollte immer dann, wenn sich der Hydraulikzylinder 7 in seinem den Regelkreis schließenden Betriebszustand befindet, die Niveauregulierung deaktiviert sein. Umgekehrt sollte die Niveauregulierung aktiviert sein, wenn der Hydraulikzylinder 7 als Stoßdämpfer wirkt, nämlich dann wenn das Fahrzeug fährt.

Weiterhin ist die elektronische Steuerung 57 über einen Eingang 67 und eine elektrische Leitung 66 mit einem Geschwindigkeitsgeber 65 verbunden, so dass ein automatisches Umschalten des Systems in Abhängigkeit der Geschwindigkeit erfolgen kann. Beispielsweise kann beim Überschreiten einer Geschwindigkeitsschwelle die Niveauregulierung aktiviert werden, und das Schließventil 22 kann zum Bereitstellen der Stoßdämpferfunktion geöffnet werden.

Bei der in Figur 3 dargestellten Ausführungsform der vorliegenden Erfindung sind an dem Hydraulikzylinder 7 Druckfühler 29', 30' für den unteren Arbeitsraum 11 und den oberen Arbeitsraum 10 vorgesehen. Diese Druckfühler 29', 30' sind über Eingänge 52', 53' und elektrische Leitungen 59, 60 mit Eingängen 61, 62 der elektronischen Steuerung 57 verbunden. Über einen Ausgang 63 und eine elektrische Leitung 68 ist die elektronische Steuerung 57 mit einem Betätigungselement 33' der ersten Ventileinrichtung 32' verbunden. Gleichermaßen ist über einen Ausgang 64 und eine elektrische Leitung 69 die elektronische Steuerung 57 mit einem weiteren Betätigungselement 33' der ersten Ventileinrichtung 32' verbunden. Diese elektrisch angesteuerten Betätigungselemente 33' können über eine Verbindung zum Druckluftbehälter 14 pneumatisch beim Umschalten der ersten Ventileinrichtung 32' unterstützt werden.

Da bei der Ausführungsform gemäß Figur 3 nur eine Ventileinrichtung in der Steuereinheit 34' vorgesehen ist, nämlich die erste Ventileinrichtung 32', müssen die Luftführungsaufgaben sowohl bei der Fahrt als auch im Stand des Fahrzeugs von dieser ersten Ventileinrichtung 32' übernommen werden. Das Aufrechterhalten des Niveaus beim Beladen und Entladen des Fahrzeugs wird in vergleichbarer Weise von der ersten Ventileinrichtung 32' wahrgenommen, wie dies bei der Ausführungsform gemäß Figur 1 der Fall war, wobei allerdings elektrische Signale der Steuereinrichtung 57 zur Ansteuerung der Betätigungselemente 33' verwendet werden, die in Abhängigkeit der von den Druckfühlern 29, 30 gelieferten elektrischen Signale ausgegeben werden. Aber auch während der Fahrt des Fahrzeugs wird die erste Ventileinrichtung 32' verwendet. In diesem Fall wird eine Niveauregeleinrichtung dadurch gebildet, dass der Niveausensor 70 unter Vermittlung der elektronischen Steuervorrichtung 38 mit der ersten Ventileinrichtung 32' in der Weise zusammenwirkt, dass der Luftfederbalg 12 bei Bedarf belüftet und entlüftet werden kann.

Die elektronische Steuerung 57 beziehungsweise der Mikrocontroller 58 ist so programmiert, dass in Abhängigkeit von vorbestimmten Ansprechdruckwerten, die von den Druckfühlern 29, 30 aufgenommen werden, Ausgangssignale an die Betätigungselemente 33' gegeben werden können. Diese Ansprechdruckwerte können so festgelegt sein, dass sie gleich dem Druck sind, der in dem Moment existiert in dem der unbeladene Gabelstapler mit seinem ganzen Gewicht auf die Ladefläche fährt. Diese Druckwerte können beispielsweise empirisch bestimmt werden. Ebenfalls ist es denkbar, dass an einem weiteren Eingang der elektronischen Steuerung ein Steuerelement angeordnet ist, mit dem der Ansprechdruck in Abhängigkeit der Gabelstaplermasse eingestellt werden kann. Der Mikrocontroller 58 kann weiterhin so programmiert sein, dass er einen Befehl zur Kompensation von einem Drittel der gemessenen Belastungszunahme ausgibt. Dies entspricht einem Erfahrungswert, da der Gabelstapler nicht mehr als die Hälfte seines Eigengewichts zuladen darf. Diese und andere Verfahren zum Aufrechterhalten des Niveaus der Ladefläche können mit Hilfe des elektronischen Systems sehr flexibel realisiert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Sattelanhänger
- 2: Plattform, Nutzebene
- 3: Ladefläche
- 5: Achse
- 7: Hydraulikzylinder
- 8: Kolben
- 10: oberer Arbeitsraum
- 11: unterer Arbeitsraum
- 12: Federbalg
- 13: Stirnfläche
- 14: Druckluftvorratsbehälter
- 15: pneumatische Leitung
- 16: Niveauregelventil
- 17: Hebel
- 18: pneumatische Leitung
- 19, 19': pneumatische Leitung
- 20: Dichtung
- 21: Bypass-Leitung
- 22: Schließventil
- 23: Drossel
- 24, 24': Betätigungselement
- 25: pneumatische Leitung
- 26: Eingang
- 27: pneumatische Leitung
- 28: pneumatische Leitung
- 29: Druckfühler
- 30: Druckfühler
- 31: Feder
- 32, 32': erste Ventileinrichtung
- 33, 33': Betätigungselement
- 34. 24': Steuereinheit
- 35: pneumatische Leitung
- 35': elektrische Leitung
- 36, 36': Eingang
- 37, 37': Betätigungselement
- 38, 38': fünfter Eingang
- 39: zweite Ventileinrichtung
- 40: pneumatische Leitung
- 41: pneumatische Leitung
- 42: pneumatische Leitung
- 43: pneumatische Leitung
- 44: Ausgang
- 45: dritte Ventileinrichtung
- 46, 46': Eingang
- 47, 47': Betätigungselement
- 48: Ausgang
- 49: Druckbegrenzungsventil
- 50: Eingang
- 51: Feder
- 52, 52': Eingang
- 53, 53': Eingang
- 56: Ende der Fahrzeugachse
- 57: elektronische Steuerung
- 58: Mikrocontroller
- 59: elektrische Leitung
- 60: elektrische Leitung
- 61: Eingang
- 62: Eingang
- 63: Ausgang
- 64: Ausgang
- 65: Geschwindigkeitsgeber
- 66: elektrische Leitung
- 67: Eingang
- 68: pneumatische Leitung
- 69: elektrische Leitung
- 70: Niveausensor

## Patentansprüche

1. System zum Aufrecherhalten des Niveaus einer Nutzebene (2) eines Fahrzeugs mit
- mindestens einem die Nutzebene (2) unterstützenden Luftfederbalg (12) und
- mindestens einer Niveauregeleinrichtung zum Belüften und Entlüften des Luftfederbalgs (12),
**dadurch gekennzeichnet,**
- **dass** mindestens eine Steuereinheit (34, 34') vorgesehen ist, die die Niveauregeleinrichtung aktiviert beziehungsweise deaktiviert,
- **dass** mindestens ein die Nutzebene (2) unterstützender Hydraulikzylinder (7) vorgesehen ist, der durch die Steuereinheit (34, 34') in mindestens einen ersten Betriebszustand und einen zweiten Betriebszustand überführbar ist,
- **dass** in dem ersten Betriebszustand des Hydraulikzylinders (7) durch Belastung der Nutzebene (2) entstehende Druckänderungen in dem Hydraulikzylinder (7) ausgeglichen werden können und
- **dass** in dem zweiten Betriebszustand des Hydraulikzylinders (7) durch Belastung der Nutzebene entstehende Druckänderungen in dem Hydraulikzylinder (7) die Steuereinheit (34, 34') in der Weise beeinflussen, dass der mindestens eine Luftfederbalg (12) belüftet oder entlüftet werden kann.

2. System nach Anspruch 1, **dadurch gekennzeichnet, dass** der mindestens eine Hydraulikzylinder (7) in der Nähe des mindestens einen Luftfederbalgs (12) zwischen einer Achse (5) und der Nutzebene (2) des Fahrzeugs angeordnet ist.

3. System nach Anspruch 1 oder 2, **dadurch gekennzeichnet, dass** mehrere paarweise angeordnete Hydraulikzylinder (7) und Luftfederbälge (12) vorgesehen sind.

4. System nach einem der vorangehenden Ansprüche, **dadurch gekennzeichnet,**
- **dass** der mindestens eine Hydraulikzylinder (7) einen ersten Arbeitsraum (10) und einen zweiten Arbeitsraum (11) aufweist, die durch einen Kolben (50) voneinander getrennt sind,
- **dass** die Arbeitsräume (10) durch eine mit einem über die Steuereinheit (34, 34') ansteuerbaren Schließventil (22) versehene Bypass-Leitung (21) miteinander verbunden sind, wobei in dem ersten Betriebszustand des Hydraulikzylinders (7) das Schließventil (22) geöffnet ist, so dass ein Druckausgleich zwischen den Arbeitsräumen (10, 11) erfolgen kann, und in dem zweiten Betriebszustand des Hydraulikzylinders (7) das Schließventil (22) geschlossen ist, so dass durch Belastung beziehungsweise Entlastung des Kolbens (50) unterschiedliche Drücke in den Arbeitsräumen (10, 11) des Hydraulikzylinders (7) aufgebaut werden können und dadurch die Steuereinheit (34, 34') beeinflusst werden kann.

5. System nach einem der vorangehenden Ansprüche, **dadurch gekennzeichnet, dass** in der Bypass-Leitung (21) ein regelbares Drosselventil (23) vorgesehen ist, insbesondere zur Realisierung einer Stoßdämpferfunktion des Hydraulikzylinders (7).

6. System nach einem der vorangehenden Ansprüche, **dadurch gekennzeichnet, dass** in dem mindestens einen Hydraulikzylinder (7) mindestens ein Druckbegrenzungsventil (49) vorgesehen ist, das oberhalb eines vorbestimmten Grenzdrucks einen Druckausgleich auch bei geschlossenem Schließventil (22) ermöglicht.

7. System nach einem der vorangehenden Ansprüche, **dadurch gekennzeichnet, dass** die Steuereinheit (34, 34') eine erste Ventileinrichtung (32, 32') aufweist, wobei die erste Ventileinrichtung (32, 32') im zweiten Betriebszustand des Hydraulikzylinders (7) von diesem unmittelbar oder mittelbar in mehrere Schaltzustände überführt werden kann, mit
- einem ersten Schaltzustand zum Koppeln des Luftfederbalgs (12) mit einem Druckluftvorrat (14),
- einem zweiten Schaltzustand zum Entkoppeln des Luftfederbalgs (12) von dem Druckluftvorrat (14) und
- einem dritten Schaltzustand zum Entlüften des Luftfederbalgs (12).

8. System nach einem der vorangehenden Ansprüche, **dadurch gekennzeichnet, dass** das Überführen der ersten Ventileinrichtung (32) in die mehreren Schaltzustände unter Vermittlung von Druckfühlern (29, 30) erfolgt, die an der ersten Ventileinrichtung (32) angeordnet sind.

9. System nach einem der vorangehenden Ansprüche, **dadurch gekennzeichnet, dass** die Steuereinheit (34) eine manuell einstellbare zweite Ventileinrichtung (39) aufweist, mit
- einem ersten Schaltzustand, in dem die mindestens eine Niveauregeleinrichtung (16) mit dem mindestens einen Luftfederbalg (12) gekoppelt ist,
- einem zweiten Schaltzustand, in dem die mindestens eine Niveauregeleinrichtung (16) von dem mindestens einen Luftfederbalg (12) entkoppelt ist,
- einem dritten Schaltzustand zum Senken der Nutzebene (2) und
- einem vierten Schaltzustand zum Heben der Nutzebene (2).

10. System nach einem der vorangehenden Ansprüche, **dadurch gekennzeichnet, dass** die Steuereinheit (34) eine manuell einstellbare dritte Ventileinrichtung (45) aufweist, mit
- einem ersten Schaltzustand zum Erzeugen des ersten Betriebszustands des Hydraulikzylinders (7) und
- einem zweiten Schaltzustand zum Erzeugen des zweiten Betriebszustands des Hydraulikzylinders (7).

11. System nach einem der vorangehenden Ansprüche, **dadurch gekennzeichnet, dass** das Überführen der ersten Ventileinrichtung (32') in die mehreren Schaltzustände unter Vermittlung von Druckfühlern (29',30') erfolgt, die an dem mindestens einen Hydraulikzylinder (7) angeordnet sind.

12. System nach einem der vorangehenden Ansprüche, **dadurch gekennzeichnet, dass** die Steuereinheit (34') eine elektronische Steuerung (57) umfasst.

13. System nach Anspruch 12, **dadurch gekennzeichnet, dass** die elektronische Steuerung (57) die erste Ventileinrichtung (32') und das Schließventil (22) elektrisch ansteuert.

14. System nach Anspruch 12 oder 13, **dadurch gekennzeichnet, dass** eine Betätigung der ersten Ventileinrichtung (32') und des Schließventils (22), die aufgrund der elektrischen Ansteuerung erfolgt, pneumatisch unterstützt wird.

15. System nach einem der Ansprüche 12 bis 14, **dadurch gekennzeichnet, dass** die elektronische Steuerung (57) die erste Ventileinrichtung (32') so steuert,
- dass die erste Ventileinrichtung (32') zusammen mit einem Niveausensor (70) den ersten Betriebszustand der Niveauregeleinrichtung realisiert, während sich der Hydraulikzylinder (7) in seinem ersten Betriebszustand befindet, und
- dass sich der Hydraulikzylinder (7) während des zweiten Betriebszustands der Niveauregeleinrichtung in seinem zweiten Betriebszustand befindet.

16. System nach einem der Ansprüche 12 bis 15, **dadurch gekennzeichnet, dass** die elektronische Steuerung (57) in Abhängigkeit eines Geschwindigkeitssignals in den aktiven Zustand der Niveauregeleinrichtung umschalten kann.

17. Verfahren zum Aufrecherhalten des Niveaus einer Nutzebene eines Fahrzeugs, bei dem
- die Nutzebene (2) durch mindestens einen Luftfederbalg (12) unterstützt wird und
- in einem ersten aktiven Betriebszustand mindestens einer Niveauregeleinrichtung der Luftfederbalg (12) belüftet beziehungsweise entlüftet wird,
**dadurch gekennzeichnet,**
- **dass** zwischen dem ersten Betriebszustand der Niveauregeleinrichtung und einem zweiten Betriebszustand der Niveauregeleinrichtung durch mindestens eine Steuereinheit (34, 34') umgeschaltet wird, wobei die Niveauregeleinrichtung in dem zweiten Betriebszustand deaktiviert ist,
- **dass** durch die Steuereinheit (34, 34') zwischen mindestens einem ersten Betriebszustand und einem zweiten Betriebszustand mindestens eines die Nutzebene (2) unterstützenden Hydraulikzylinders (7), umgeschaltet wird,
- **dass** in dem ersten Betriebszustand des Hydraulikzylinders (7) durch Belastung der Nutzebene (2) entstehende Druckänderungen in dem Hydraulikzylinder (7) ausgeglichen werden und
- **dass** in dem zweiten Betriebszustand des Hydraulikzylinders (7) durch Belastung der Nutzebene (2) entstehende Druckänderungen in dem Hydraulikzylinder (7) die Steuereinheit (34, 34') in der Weise beeinflussen, dass der mindestens eine Luftfederbalg (12) belüftet oder entlüftet werden kann.

18. Verfahren nach Anspruch 17, **dadurch gekennzeichnet, dass** der mindestens eine Hydraulikzylinder (7) einen ersten Arbeitsraum (10) und einen zweiten Arbeitsraum (11) aufweist, die durch einen Kolben (50) voneinander getrennt sind, und dass die Arbeitsräume (10, 11) durch eine mit einem über die Steuereinheit (34, 34') ansteuerbaren Schließventil (22) versehene Bypass-Leitung (21) miteinander verbunden sind, wobei
- in dem ersten Betriebszustand des Hydraulikzylinders (7) das Schließventil (22) geöffnet ist, so dass ein Druckausgleich zwischen den Arbeitsräumen (10, 11) erfolgen kann, und
- in dem zweiten Betriebszustand des Hydraulikzylinders (7) das Schließventil (22) geschlossen ist, so dass durch Belastung beziehungsweise Entlastung des Kolbens (50) unterschiedliche Drücke in den Arbeitsräumen (10, 11) des Hydraulikzylinders (7) aufgebaut werden können und dadurch die Steuereinheit (34, 34') beeinflusst wird.

19. Verfahren nach Anspruch 17 öder 18, **dadurch gekennzeichnet, dass** ein Fluidstrom in der Bypass-Leitung (21) unter Regelung gedrosselt wird, insbesondere zur Realisierung einer Stoßdämpferfunktion des Hydraulikzylinders (7).

20. Verfahren nach einem der Ansprüche 17 bis 19, **dadurch gekennzeichnet, dass** in dem mindestens einen Hydraulikzylinder (7) mindestens ein Druckbegrenzungsventil (49) vorgesehen ist, das oberhalb eines vorbestimmten Grenzdrucks einen Druckausgleich auch bei geschlossenem Schließventil (22) ermöglicht.

21. Verfahren nach einem der Ansprüche 17 bis 20, **dadurch gekennzeichnet, dass** die Steuereinheit (34, 34') eine erste Ventileinrichtung (32, 32') aufweist, wobei die erste Ventileinrichtung (32, 32') im zweiten Betriebszustand des Hydraulikzylinders (7) von diesem in mehrere Schaltzustände überführt werden kann, mit
- einem ersten Schaltzustand zum Koppeln des Luftfederbalgs (12) mit einem Druckluftvorrat (14),
- einem zweiten Schaltzustand zum Entkoppeln des Luftfederbalgs (12) von dem Druckluftvorrat (14) und
- einem dritten Schaltzustand zum Entlüften des Luftfederbalgs (12) .

22. Verfahren nach einem der Ansprüche 17 bis 21, **dadurch gekennzeichnet, dass** das Überführen der ersten Ventileinrichtung (32) in die mehreren Schaltzustände unter Vermittlung von Druckfühlern (29, 30) erfolgt, die an der ersten Ventileinrichtung (32) angeordnet sind.

23. Verfahren nach einem der Ansprüche 17 bis 22, **dadurch gekennzeichnet, dass** die Steuereinheit (34) eine manuell einstellbare zweite Ventileinrichtung (39) aufweist, mit
- einem ersten Schaltzustand, in dem die mindestens eine Niveauregeleinrichtung (16) mit dem mindestens einen Luftfederbalg (12) gekoppelt ist,
- einem zweiten Schaltzustand, in dem die mindestens eine Niveauregeleinrichtung (16) von dem mindestens einen Luftfederbalg (12) entkoppelt ist,
- einem dritten Schaltzustand zum Senken der Nutzebene (2) und
- einem vierten Schaltzustand zum Heben der Nutzebene (2).

24. Verfahren nach einem der Ansprüche 17 bis 23, **dadurch gekennzeichnet, dass** die Steuereinheit (34) eine manuell einstellbare dritte Ventileinrichtung (45) aufweist, mit
- einem ersten Schaltzustand zum Erzeugen des ersten Betriebszustands des Hydraulikzylinders (7) und
- einem zweiten Schaltzustand zum Erzeugen des zweiten Betriebszustands des Hydraulikzylinders (7).

25. Verfahren nach einem der Ansprüche 17 bis 24, **dadurch gekennzeichnet, dass** das Überführen der ersten Ventileinrichtung (32') in die mehreren Schaltzustände unter Vermittlung von Druckfühlern (29', 30') erfolgt, die an dem mindestens einen Hydraulikzylinder (7) angeordnet sind.

26. Verfahren nach einem der Ansprüche 17 bis 25, **dadurch gekennzeichnet, dass** die Steuereinheit (34') eine elektronische Steuerung (57) umfasst.

27. Verfahren nach Anspruch 26, **dadurch gekennzeichnet, dass** die elektronische Steuerung (57) die erste Ventileinrichtung (32') und das Schließventil (22) elektrisch ansteuert.

28. Verfahren nach Anspruch 26 oder 27, **dadurch gekennzeichnet, dass** eine Betätigung der ersten Ventileinrichtung (32') und des Schließventils (22) aufgrund der elektrischen Ansteuerung pneumatisch unterstützt wird.

29. Verfahren nach einem der Ansprüche 26 bis 28, **dadurch gekennzeichnet, dass** die elektronische Steuerung (57) die erste Ventileinrichtung (32') so steuert,
- dass die erste Ventileinrichtung (32') zusammen mit einem Niveausensor (70) den ersten Betriebszustand der Niveauregeleinrichtung realisiert, während sich der Hydraulikzylinder (7) in seinem ersten Betriebszustand befindet, und
- dass sich der Hydraulikzylinder (7) während des zweiten Betriebszustands der Niveauregeleinrichtung in seinem zweiten Betriebszustand befindet.

30. Verfahren nach einem der Ansprüche 26 bis 29, **dadurch gekennzeichnet, dass** die elektronische Steuerung (57) in Abhängigkeit eines Geschwindigkeitssignals in den aktiven Zustand der Niveauregeleinrichtung umschalten kann.

## Claims

1. System for maintaining the level of a utilizable plane (2) of a vehicle, comprising
- at least one pneumatic suspension bellows (12) and
- at least one level control means for aerating and bleeding said pneumatic suspension bellows (12),
**characterised in**
- **that** at least one controlling unit (34, 34') is provided which activates or deactivates, respectively, said level control means,
- **that** at least one hydraulic cylinder (7) is provided which supports said utilizable plane (2) and which is adapted to be controlled by said controlling unit (34, 34') into at least one first operating state and one second operating state,
- **that** in said first operating state of said hydraulic cylinder (7), pressure variations in said hydraulic cylinder (7), which are created by loading said utilizable plane (2), may be compensated, and
- **that** in said second operating state of said hydraulic cylinder (7), pressure variations in said hydraulic cylinder (7), which are created by loading said utilizable plane (2), take an influence on said controlling unit (34, 34') in such a way that aeration or bleeding of at least one pneumatic suspension bellows (12) will be possible.

2. System according to Claim 1, **characterised in that** said at least one hydraulic cylinder (7) is disposed in the vicinity of said at least one pneumatic suspension bellows (12) between one axle (5) and said utilizable plane (2) of the vehicle.

3. System according to Claim 1 or 2, **characterised in that** a plurality of hydraulic cylinders (7) and pneumatic suspension bellows are provided, which are disposed in pairs.

4. System according to any of the preceding Claims, **characterised in**
- **that** said at least one hydraulic cylinder (7) comprises a first working space (10) and a second working space (11), which spaces are separated from each other by a piston (50),
- **that** said working spaces (10) are connected to each other by a by-pass line (21) provided with a closing valve (22) controllable via said controlling unit (34, 34'), with said closing valve (22) being open in said first operating state of said hydraulic cylinder (7) so that pressure compensation may take place between said working spaces (10, 11), and with said closing valve (22) being closed in said second operating state of said hydraulic cylinder (7) so that different pressures may be established in said working spaces (10, 11) of said hydraulic cylinder (7) by loading or relieving said piston (50), respectively, and hence said controlling unit (34, 34') may be influenced.

5. System according to any of the preceding Claims, **characterised in that** a controllable throttle valve (23) is provided in said by-pass line, in particular for realising a shock absorber function of said hydraulic cylinder (7).

6. System according to any of the preceding Claims, **characterised in that** at least one pressure control valve (40) is provided in said at least one hydraulic cylinder (7), which permits a pressure compensation above a predetermined threshold pressure even when said closing valve (22) is closed.

7. System according to any of the preceding Claims, **characterised in that** said controlling unit (34, 34') comprises a first valve means (32, 32'), with said first valve means (32, 32') being adapted to be switched by said hydraulic cylinder (7) directly or indirectly into a plurality of switching states in said second operating state of said hydraulic cylinder, including
- a first switching state for coupling said pneumatic suspension bellows (12) to a compressed-air accumulator (14),
- a second switching state for decoupling said pneumatic suspension bellows (12) from said compressed-air accumulator (14), and
- a third switching state for bleeding said pneumatic suspension bellows (12).

8. System according to any of the preceding Claims, **characterised in that** the change-over of said first valve means (32) into said plurality of switching states takes place by means of intermediary pressure sensors (29, 30) disposed on said first valve means (32).

9. System according to any of the preceding Claims, **characterised in that** said controlling unit (34) comprises a manually settable second valve means (39), providing
- a first switching state in which said at least one level control means (16) is coupled to said at least one pneumatic suspension bellows (12),
- a second switching state in which said at least one level control means (16) is decoupled from said at least one pneumatic suspension bellows (12),
- a third switching state for lowering said utilizable plane (2), and
- a fourth switching state for raising said utilizable plane (2).

10. System according to any of the preceding Claims, **characterised in that** said controlling unit (34) comprises a manually settable second valve means (39), providing
- a first switching state for creating said first operating state of said hydraulic cylinder (7), and
- a second switching state for creating said second operating state of said hydraulic cylinder (7).

11. System according to any of the preceding Claims, **characterised in that** the change-over of said first valve means (32') into said plurality of switching states takes place by means of intermediary pressure sensors (29', 30') that are disposed on said at least one hydraulic cylinder (7).

12. System according to any of the preceding Claims, **characterised in that** said controlling unit (34') comprises an electronic controller (57).

13. System according to Claim 12, **characterised in that** said electronic controller (57) electrically controls said first valve means (32') and said closing valve (22).

14. System according to Claim 12 or 13, **characterised in that** the actuation of said first valve means (32') and of said closing valve (22), which takes place in response to the electrical control, is pneumatically assisted.

15. System according to any of the Claims 12 to 14, **characterised in**
- **that** said first valve means (32'), in cooperation with a level sensor (70), realises said first operating state while said hydraulic cylinder (7) is in its first operating state, and
- **that** said hydraulic cylinder (7) is in its second operating state during said second operating state of said level control means.

16. System according to any of the Claims 12 to 15, **characterised in that** said electronic controller (57) is capable of switching over into the active state of said level control means as a function of a speed signal.

17. Method of maintaining the level of a utilizable plane of a vehicle, wherein
- said utilizable plane (2) is supported by at least one pneumatic suspension bellows (12), and
- in a first active operating state of at least one level control means, aeration or bleeding of said pneumatic suspension bellows (12), respectively, takes place,
**characterised in**
- **that** the change-over between said first operating state of said level control means and a second operating state of said level control means is induced by at least one controlling unit (34, 34'), with said level control means being deactivated in said second operating state,
- **that** said controlling unit (34, 34') induces the change-over between at least one first operating state and one second operating state of at least one hydraulic cylinder (7) supporting said utilizable plane (2),
- **that** in said first operating state of said hydraulic cylinder (7), pressure variations in said hydraulic cylinder (7), which are created by loading said utilizable plane (2), are compensated, and
- **that** in said second operating state of said hydraulic cylinder (7), pressure variations in said hydraulic cylinder (7), which are created by loading said utilizable plane (2), take an influence on said controlling unit (34, 34') in such a way that aeration or bleeding of said at least one pneumatic suspension bellows (12) will be possible.

18. Method according to Claim 17, **characterised in that** said at least one hydraulic cylinder (7) comprises a first working space (10) and a second working space (11), which spaces are separated from each other by a piston (50), and that said working spaces (10, 11) are connected to each other by a by-pass line (21) provided with a closing valve (22) controllable via said controlling unit (34, 34'), wherein
- said closing valve (22) is open in said first operating state of said hydraulic cylinder (7) so that pressure compensation may take place between said working spaces (10, 11), and
- said closing valve (22) is closed in said second operating state of said hydraulic cylinder (7) so that different pressures may be established in said working spaces (10, 11) of said hydraulic cylinder (7) by loading or relieving said piston (50), respectively, and hence said controlling unit (34, 34') is influenced.

19. Method according to Claim 17 or 18, **characterised in that** a fluid flow in said by-pass line (21) is throttled with closed-loop control, in particular for realising a shock absorber function of said hydraulic cylinder (7).

20. Method according to any of the Claims 17 to 19, **characterised in that** at least one pressure control valve (49) is provided in said at least one hydraulic cylinder (7), which permits pressure compensation above a predetermined threshold pressure even when said closing valve (22) is closed

21. Method according to any of the Claims 17 to 20, **characterised in that** said controlling unit (34, 34') comprises a first valve means (32, 32'), with said first valve means (32, 32') being adapted to be switched over by said hydraulic cylinder (7) into a plurality of switching states in said second operating state of said hydraulic cylinder, which include
- a first switching state for coupling said pneumatic suspension bellows (12) to a compressed-air accumulator (14),
- a second switching state for decoupling said pneumatic suspension bellows (12) from said compressed-air accumulator (14), and
- a third switching state for bleeding said pneumatic suspension bellows (12).

22. Method according to any of the Claims 17 to 21, **characterised in that** the change-over of said first valve means (32) into said plurality of switching states takes place by means of intermediary pressure sensors (29, 30) disposed on said first valve means (32)

23. Method according to any of the Claims 17 to 22, **characterised in that** said controlling unit (34) comprises a manually settable second valve means (39), providing
- a first switching state in which said at least one level control means (16) is coupled to said at least one pneumatic suspension bellows (12),
- a second switching state in which said at least one level control means (16) is decoupled from said at least one pneumatic suspension bellows (12),
- a third switching state for lowering said utilizable plane (2), and
- a fourth switching state for raising said utilizable plane (2).

24. Method according to any of the Claims 17 to 23, **characterised in that** said controlling unit (34) comprises a manually settable valve means (45) providing
- a first switching state for creating said first operating state of said hydraulic cylinder (7), and
- a second switching state for generating said second operating state of said hydraulic cylinder (7).

25. Method according to any of the Claims 17 to 24, **characterised in that** the change-over of said first valve means (32') into said plurality of switching states takes place by means of intermediary pressure sensors (29', 39') disposed on said at least one hydraulic cylinder (7).

26. Method according to any of the Claims 17 to 25, **characterised in that** said controlling unit (34') comprises an electronic controller (57).

27. Method according to Claim 26, **characterised in that** said electronic controller (57) electrically controls said first valve means (32') and said closing valve (22).

28. Method according to Claim 26 or 27, **characterised in that** the actuation of said first valve means (32') and said closing valve (22) is pneumatically assisted in response to said electrical control.

29. Method according to any of the Claims 26 to 28, **characterised in that** said electronic controller (57) controls said first valve means (32') in such a way
- that said first valve means (32'), in cooperation with a level sensor (70), realises said first operating state while said hydraulic cylinder (7) is in its first operating state, and
- that said hydraulic cylinder (7) is in its second operating state during said second operating state of said level control means.

30. Method according to any of the Claims 26 to 29, **characterised in that** said electronic controller (57) is capable of switching over into the active state of said level control means as a function of a speed signal.

## Revendications

1. Système à maintenir le niveau d'un plan utile (2) d'un véhicule, comprenant
- au moins un soufflet de suspension pneumatique (12) et
- au moins un moyen de nivelage à aérer et désaérer ledit soufflet de suspension pneumatique (12),
**caractérisé en ce**
- **qu'**au moins une unité de commande (34, 34') est incorporée, qui active ou respectivement désactive ledit moyen de nivelage,
- **qu'**au moins un cylindre hydraulique (7) est incorporé, qui appuie ledit plan utile (2) et qui est apte à être commandé par ladite unité de commande (34, 34') en au moins un premier état de marche et un deuxième état de marche,
- **qu'**en ledit premier état de marche dudit cylindre hydraulique (7), on peut compenser des variations de pression dans ledit cylindre hydraulique (7), qui sont engendrées par chargement dudit plan utile (2), et
- **qu'**en ledit deuxième état de marche dudit cylindre hydraulique (7), des variations de pression dans ledit cylindre hydraulique (7), qui sont engendrées par chargement dudit plan utile (2), prennent de l'influence sur ladite unité de commande (34, 34') d'une telle manière, que l'aération ou désaération d'au moins un soufflet de suspension pneumatique (12) soit possible.

2. Système selon la revendication 1, **caractérisé en ce que** ledit au moins un cylindre hydraulique (7) est disposé à proximité dudit au moins un soufflet de suspension pneumatique (12) entre un essieu (5) et ledit plan utile (2) du véhicule.

3. Système selon la revendication 1 ou 2, **caractérisé en ce qu'**une pluralité de cylindres hydrauliques (7) et des soufflets de suspension pneumatique sont prévus, qui sont disposés en paires.

4. Système selon une quelconque des revendications précédentes, **caractérisé en ce**
- **que** ledit au moins un cylindre hydraulique (7) comprend un premier espace de travail (10) et un deuxième espace de travail (11), lesquels espaces sont séparés l'un de l'autre par un piston (50),
- **que** lesdits espaces de travail (10) sont reliés l'un à l'autre par un conduit de dérivation (21) pourvu d'une soupape de fermeture (22) commandable via ladite unité de commande (34, 34'), à ladite soupape de fermeture (22) étant ouverte en ledit premier état de marche dudit cylindre hydraulique (7) d'une telle façon, qu'une compensation de pression se réalise entre lesdits espaces de travail (10, 11), et à ladite soupape de fermeture (22) étant fermée en ledit deuxième état de marche dudit cylindre hydraulique (7) d'une telle façon, qu'il soit possible d'établir des pressions différentes dans lesdits espaces de travail (10, 11) dudit cylindre hydraulique (7) en chargeant ou respectivement déchargeant ledit piston (50), et donc de prendre de l'influence sur ladite unité de commande (34, 34').

5. Système selon une quelconque des revendications précédentes, **caractérisé en ce qu'**une soupape d'étranglement (23) commandable est incorporée dans ledit conduit de dérivation, en particulier pour la réalisation d'une fonction d'amortisseur dudit cylindre hydraulique (7).

6. Système selon une quelconque des revendications précédentes, **caractérisé en ce qu'**au moins un limiteur de pression (40) est incorporé dans ledit au moins un cylindre hydraulique (7), qui permet une compensation de pression en dessus d'une pression limite prédéterminée même quand ladite soupape de fermeture (22) est fermée.

7. Système selon une quelconque des revendications précédentes, **caractérisé en ce que** ladite unité de commande (34, 34') comprend un premier moyen de soupape (32, 32'), audit premier moyen de soupape (32, 32') étant apte à être commuté par ledit cylindre hydraulique (7) directement ou indirectement en une pluralité d'états de commutation en ledit deuxième état de marche dudit cylindre hydraulique, renfermant
- un premier état de commutation à coupler ledit soufflet de suspension pneumatique (12) à un accumulateur de l'air comprimé (14),
- un deuxième état de commutation à découpler ledit soufflet de suspension pneumatique (12) dudit accumulateur de l'air comprimé (14), et
- un troisième état de commutation à désaérer ledit soufflet de suspension pneumatique (12).

8. Système selon une quelconque des revendications précédentes, **caractérisé en ce que** la commutation dudit premier moyen de soupape (32) en ladite pluralité d'états de commutation se fait moyennant des capteurs de pression intermédiaires (29, 30) disposés audit premier moyen de soupape (32).

9. Système selon une quelconque des revendications précédentes, **caractérisé en ce que** ladite unité de commande (34) comprend un deuxième moyen de soupape ajustable à la main (39), établissant
- un premier état de commutation, dans lequel ledit au moins un moyen de nivelage (16) est accouplé audit au moins un soufflet de suspension pneumatique (12),
- un deuxième état de commutation, dans lequel ledit au moins un moyen de nivelage (16) est découplé dudit au moins un soufflet de suspension pneumatique (12),
- un troisième état de commutation à abaisser ledit plan utile (2), et
- un quatrième état de commutation à soulever ledit plan utile (2).

10. Système selon une quelconque des revendications précédentes, **caractérisé en ce que** ladite unité de commande (34) comprend un deuxième moyen de soupape ajustable à la main (39), établissant
- un premier état de commutation à établir ledit premier état de marche dudit cylindre hydraulique (7), et
- un deuxième état de commutation à établir ledit deuxième état de marche dudit cylindre hydraulique (7).

11. Système selon une quelconque des revendications précédentes, **caractérisé en ce que** la commutation dudit premier moyen de soupape (32') en ladite pluralité d'états de commutation se fait moyennant des capteurs de pression intermédiaires (29', 30'), qui sont disposés audit au moins un cylindre hydraulique (7).

12. Système selon une quelconque des revendications précédentes, **caractérisé en ce que** ladite unité de commande (34') comprend un système de réglage électronique (57).

13. Système selon la revendication 12, **caractérisé en ce que** ledit système de réglage électronique (57) règle, de façon électrique, ledit premier moyen de soupape (32') et ladite soupape de fermeture (22).

14. Système selon la revendication 12 ou 13, **caractérisé en ce que** l'actionnement dudit premier moyen de soupape (32') et de ladite soupape de fermeture (22), qui se fait en réponse à la régulation électrique, est assisté en régime pneumatique.

15. Système selon une quelconque des revendications 12 à 14, **caractérisé en ce**
- **que** ledit premier moyen de soupape (32'), en interaction avec un détecteur de niveau (70), réalise ledit premier état de marche, pendant que ledit cylindre hydraulique (7) se trouve en son premier état de marche, et
- en ce que ledit cylindre hydraulique (7) se trouve en son deuxième état de marche au cours dudit deuxième état de marche dudit moyen de nivelage.

16. Système selon une quelconque des revendications 12 à 15, **caractérisé en ce que** ledit système de réglage électronique (57) est capable de commuter en l'état actif dudit moyen de nivelage en fonction d'un signal de vitesse.

17. Procédé à maintenir le niveau d'un plan utile d'un véhicule, dans lequel
- ledit plan utile (2) est appuyé par au moins un soufflet de suspension pneumatique (12), et
- en un premier état actif de marche d'au moins un moyen de nivelage, se fait l'aération ou respectivement la désaération dudit soufflet de suspension pneumatique (12),
**caractérisé en ce**
- **que** la commutation entre ledit premier état de marche dudit moyen de nivelage et un deuxième état de marche dudit moyen de nivelage est induit par au moins une unité de commande (34, 34'), audit moyen de nivelage étant activé en ledit deuxième état de marche,
- **que** ladite unité de commande (34, 34') induit la commutation entre au moins un premier état de marche et un deuxième état de marche d'au moins un cylindre hydraulique (7) appuyant ledit plan utile (2),
- **qu'**en ledit premier état de marche dudit cylindre hydraulique (7), des variations de pression dans ledit cylindre hydraulique (7), qui sont engendrées par chargement dudit plan utile (2), sont compensées, et
- en ce qu'en ledit deuxième état de marche dudit cylindre hydraulique (7), des variations de pression dans ledit cylindre hydraulique (7), qui sont engendrées par chargement dudit plan utile (2), prennent de l'influence sur ladite unité de commande (34, 34') d'une telle manière, que l'aération ou la désaération dudit au moins un soufflet de suspension pneumatique (12) soit possible.

18. Procédé selon la revendication 17, **caractérisé en ce que** ledit au moins un cylindre hydraulique (7) comprend un premier espace de travail (10) et un deuxième espace de travail (11), lesquels espaces sont séparés l'un de l'autre par un piston (50), et **en ce que** lesdits espaces de travail (10, 11) sont reliés l'un à l'autre par un conduit de dérivation (21) pourvu d'une soupape de fermeture (22) commandable via ladite unité de commande (34, 34'), dans lequel
- ladite soupape de fermeture (22) est ouverte en ledit premier état de marche dudit cylindre hydraulique (7) d'une telle façon, que la compensation de pression se fasse entre lesdits espaces de travail (10, 11), et
- ladite soupape de fermeture (22) est fermée en ledit deuxième état de marche dudit cylindre hydraulique (7) d'une telle façon, que des pressions différentes se puissent établir dans lesdits espaces de travail (10, 11) dudit cylindre hydraulique (7) par chargement ou respectivement déchargement dudit piston (50), et donc ladite unité de commande (34, 34') soit influencée.

19. Procédé selon la revendication 17 ou 18, **caractérisé en ce qu'**un courant de fluide dans ledit conduit de dérivation (21) est étranglé en régime de réglage asservi, en particulier à réaliser une fonction d'amortisseur dudit cylindre hydraulique (7).

20. Procédé selon une quelconque des revendications 17 à 19, **caractérisé en ce qu'**au moins un limiteur de pression (49) est incorporé dans ledit au moins un cylindre hydraulique (7), qui permet la compensation de pression en dessus d'une pression limite prédéterminée même quand ladite soupape de fermeture (22) est fermée

21. Procédé selon une quelconque des revendications 17 à 20, **caractérisé en ce que** ladite unité de commande (34, 34') comprend un premier moyen de soupape (32, 32'), audit premier moyen de soupape (32, 32') étant apte à être commue par ledit cylindre hydraulique (7) en une pluralité d'états de commutation en ledit deuxième état de marche dudit cylindre hydraulique, qui renferment
- un premier état de commutation à coupler ledit soufflet de suspension pneumatique (12) à un accumulateur de l'air comprimé (14),
- un deuxième état de commutation à découpler ledit soufflet de suspension pneumatique (12) dudit accumulateur de l'air comprimé (14), et
- un troisième état de commutation à désaérer ledit soufflet de suspension pneumatique (12).

22. Procédé selon une quelconque des revendications 17 à 21, **caractérisé en ce que** la commutation dudit premier moyen de soupape (32) en ladite pluralité d'états de commutation se fait moyennant des capteurs de pression intermédiaires (29, 30) disposés audit premier moyen de soupape (32)

23. Procédé selon une quelconque des revendications 17 à 22, **caractérisé en ce que** ladite unité de commande (34) comprend un deuxième moyen de soupape ajustable à la main (39), établissant
- un premier état de commutation, dans lequel ledit au moins un moyen de nivelage (16) est couplé audit au moins un soufflet de suspension pneumatique (12),
- un deuxième état de commutation, dans lequel ledit au moins un moyen de nivelage (16) est découplé dudit au moins un soufflet de suspension pneumatique (12),
- un troisième état de commutation à abaisser ledit plan utile (2), et
- un quatrième état de commutation à soulever ledit plan utile (2).

24. Procédé selon une quelconque des revendications 17 à 23, **caractérisé en ce que** ladite unité de commande (34) comprend un moyen de soupape ajustable à la main (45) et ajustant
- un premier état de commutation à établir ledit premier état de marche dudit cylindre hydraulique (7), et
- un deuxième état de commutation à établir ledit deuxième état de marche dudit cylindre hydraulique (7).

25. Procédé selon une quelconque des revendications 17 à 24, **caractérisé en ce que** la commutation dudit premier moyen de soupape (32') en ladite pluralité d'états de commutation se fait moyennant des capteurs de pression intermédiaires (29', 39') disposés audit au moins un cylindre hydraulique (7).

26. Procédé selon une quelconque des revendications 17 à 25, **caractérisé en ce que** ladite unité de commande (34') comprend un système de réglage électronique (57).

27. Procédé selon la revendication 26, **caractérisé en ce que** ledit système de réglage électronique (57) règle, de façon électrique, ledit premier moyen de soupape (32') et ladite soupape de fermeture (22).

28. Procédé selon la revendication 26 ou 27, **caractérisé en ce que** l'actionnement dudit premier moyen de soupape (32') et de ladite soupape de fermeture (22) est assisté, en régime pneumatique, en réponse audit réglage électrique.

29. Procédé selon une quelconque des revendications 26 à 28, **caractérisé en ce que** ledit système de réglage électronique (57) règle ledit premier moyen de soupape (32') d'une telle manière,
- que ledit premier moyen de soupape (32'), en interaction avec un détecteur de niveau (70), réalise ledit premier état de marche, pendant que ledit cylindre hydraulique (7) se trouve en son premier état de marche, et
- que ledit cylindre hydraulique (7) se trouve en son deuxième état de marche au cours dudit deuxième état de marche dudit moyen de nivelage.

30. Procédé selon une quelconque des revendications 26 à 29, **caractérisé en ce que** ledit système de réglage électronique (57) est capable de commuter en l'état actif dudit moyen de nivelage en fonction d'un signal de vitesse.
